# EUROPEAN PATENT APPLICATION

(11) **EP 4 660 982 A1**
(43) Date of publication of application: **10.12.2025**
(21) Application number: 24180654.6
(22) Date of filing: 07.06.2024
(51) Int. Cl.: G08G 1/0962, G08G 1/16, B60W 50/14

(54) **METHOD AND SYSTEM FOR ASSISTING A DRIVER OF A VEHICLE FOR EMERGENCIES SITUATIONS AT LEVEL CROSSING**

(71) Applicant: Robert Bosch GmbH, 70442 Stuttgart (DE)
(72) Inventor: Erostyak, Janos, Budapest (HU)

(57) **Abstract**

Method for assisting a driver of a vehicle for emergencies situations at level crossing comprising the steps of detecting a level crossing, monitoring the operating state of the vehicle, issuing at least one warning to the driver when expected operating conditions of the vehicle on a level crossing are not detected, and, if there is no adapted reaction detected, issuing an emergency call from the vehicle.

## Description

### State of the art

The present invention relates to a method and a system for assisting a driver of a vehicle for emergencies situations at level crossing.

Level crossing accidents lead often to serious or even fatal injuries on the part of the vehicle driver. In EU, almost 300 people die annually due to crashes on level crossings as reported in the 2021 road safety thematic report of the European Commission. Most of the accidents at level crossings occur due to road user errors when for example, road users violate traffic safety rules, commit non-deliberate mistakes, are inattentive or distracted, are being stuck on the pathway of the train, or encounter technical difficulties with their vehicles at the level crossing.

Modern driver assistance system can help vehicles to navigate safely level crossings.

For example, in the patent application DE 19829162 A1, an arrangement in an automobile can detect signals containing traffic information and warn the driver in case of source of danger such as at level crossings.

### Disclosure of the invention

The object of the invention is to prevent incidents or accidents when a driver of a vehicle navigate level crossings.

This is solved by using a method and a system for assisting a driver of a vehicle for emergencies situations at level crossing.

According to the invention, the method for assisting a driver of a vehicle for emergencies situations at level crossing comprises the steps of:
- detecting a level crossing,
- monitoring the operating state of the vehicle,
- issuing at least one warning to the driver when expected operating conditions of the vehicle on a level crossing are not detected,
- if there is no adapted reaction detected, issuing an emergency call from the vehicle.

One idea of the invention lies on combining a plurality of means that evaluate accurately the emergency of a situation with different level of solutions that actively and/or passively help to prevent an incident or accident at level crossing using an advanced driver assistance system. Such method can provide adequate and fast assistance to driver of vehicle in potentially unsafe situations, for example at level crossing.

Furthermore, a system for performing the method for assisting a driver of a vehicle for emergencies situations at level crossing comprises at least:
- a navigation unit configured to locate the vehicle on a map and comprises a satellite signal sensor, a map memory, and a map matching,
- surrounding sensors such as cameras and/or radars configured to identify objects in the vehicle surroundings, in particular traffic signs,
- vehicle sensors configured to detect an operational state of the vehicle and comprise at least travel distance sensors, speed sensors, steering wheel angle sensors,
- in-car sensors configured to detect at least the driver's head movement, driver's eyelid movement, and pulse rate,
- a human-machine interface configured to issue at least one warning to the driver as optical, acoustic, or optical and acoustic signals, in particular words,
- a communication module configured to communicate with sources external to the vehicle and comprising at least one of the following communication means: an emergency call system and a V2X communication system,
- a control unit configured to process data from at least the navigation unit, the surrounding sensors, vehicle sensors, in-car sensors, and to operate at least the communication module and the human-machine interface.

The system for performing the method for assisting a driver of a vehicle for emergencies situations at level crossing operates with advanced driver assistance system (ADAS) technologies that are more and more common in vehicle, therefore, the system can be easily integrated in new car models. The system is then defined as adaptable.

Preferred further embodiments are the subject of the subclaims.

According to a further embodiment, the step of detecting the level crossing is achieved by predicting the level crossing ahead of the vehicle using a navigation unit and/or by observing and identifying the level crossing using surrounding sensors. Predicting road conditions help a driver to anticipate the road beyond what is immediately visible, and thereby contributing to a safer driving of the vehicle. In addition, observing and identifying the level crossing using surrounding sensors is a reliable and fast way to detect an upcoming potential source of danger. This further contribute to the safety of the driver.

According to a further embodiment, the step of monitoring the operating state of the vehicle comprises receiving sensor data from vehicle sensors that detect a state of the vehicle or vehicle parts; in particular, a state of motion of the vehicle. Such sensors are commonly use, the monitoring of the operating vehicle can be then easily implemented in various vehicles. In addition, such sensors provide generally reliable and real-time data on the state of the vehicle.

According to a further embodiment, the step of issuing the at least one warning to the driver is performed when a vehicle speed is lower than a predefined speed limit as detected by vehicle sensors and the vehicle is still on or too close to the level crossing as detected by surroundings sensors. Such predefined conditions or limits enable to issue a warning to the driver in an appropriate emergency situation. This avoids to distract the driver of the vehicle with warnings in unnecessary situation.

According to a further embodiment, the step of issuing the at least one warning to the driver is performed using optical, acoustic, or optical and acoustic signals. A combination of an optical and an acoustic signal is particularly preferred. This makes the driver immediately aware of an impending danger, so that he pays increased attention.

According to a further embodiment, the step of issuing the emergency call from the vehicle is performed using at least one of the following communication means: an emergency call system and a V2X communication system and when the vehicle is still on or too close to the level crossing and has a speed that is still lower than the predefined speed limit after a predefined length of time. The use of such predefined conditions with time limit enables to issue an emergency call only in suitable emergency situations as quickly as needed. This enables also to minimize unnecessary emergency call. In addition, emergency call system and V2X communication system used for the emergency call are more and more common in vehicles and such emergency call could be then issued in various type of vehicle.

According to a further embodiment, the step of issuing the emergency call is performed automatically to railway authorities and/or to an emergency call center while issuing at least one warning is performed to provide a procedure to follow for vehicle occupants and monitoring the occupant's behavior is performed using in-car sensors, vehicle sensors, and surrounding sensors. Combining monitoring the occupant's behavior with issuing automatically emergency call and procedure to follow contribute to accurately evaluate the situation and efficiently remedy to the situation. An automatic call can result in providing assistance in emergency situation where vehicle occupants that are not capable of issuing such call. Such situations can occur for example when the vehicle occupants included the driver are unconscious or show erratic behaviors or cannot reach any communication means to issue the emergency call. A call to railway authorities as well to emergency center can result in alerting the appropriate authorities that can handle such situation. For example, a call to railway authorities can result in alerting train drivers of a potential obstacle on the rails. The train driver can try to avoid a collision or mitigate the consequences of a crash by braking. A call to the emergency center can also result in alerting the railway authorities via the local authorities and in providing medical assistance to the vehicle occupants. Monitoring the occupant's behavior contribute to determine if medical assistance is necessary. Issuing simultaneously warnings increase the assistance by making the vehicle occupants aware of the appropriate procedure to follow. This can be crucial in case vehicle occupants are in distressed and/or show a lack of judgment for such emergencies situations and/or are not aware of the procedure to follow.

According to a further embodiment, a control unit operates autonomously the vehicle to move away the vehicle from the level crossing after the predefined length of time and when the vehicle is an automated vehicle and there is no appropriate response from the vehicle occupants to the at least one issued warning regarding the procedure to follow. Such control on the vehicle enable to quickly and safely remove the vehicle occupants from a source of danger, and to avoid a potential collision between the vehicle and train.

### Brief description of the drawings

The invention will be explained in greater detail with reference to exemplary embodiments depicted in the drawings as appended.

The accompanying drawings are included to provide a further understanding of the
present invention and are incorporated in and constitute a part of this specification. The
drawings illustrate a comparative embodiment and embodiments of the present invention
and together with the description serve to explain the principles of the invention. Other
embodiments of the present invention and many of the intended advantages of the present
invention will be readily appreciated as they become better understood by reference to the
following detailed description. The elements of the drawings are not necessarily to scale
relative to each other. Like reference numerals designate corresponding similar parts.
Fig. 1 shows an overall schematic view of a system for performing the method for assisting a driver of a vehicle for emergencies situations at level crossing according to one embodiment of the invention.
Fig. 2 shows a flowchart of a method for assisting a driver of a vehicle for emergencies situations at level crossing according to one embodiment of the invention.

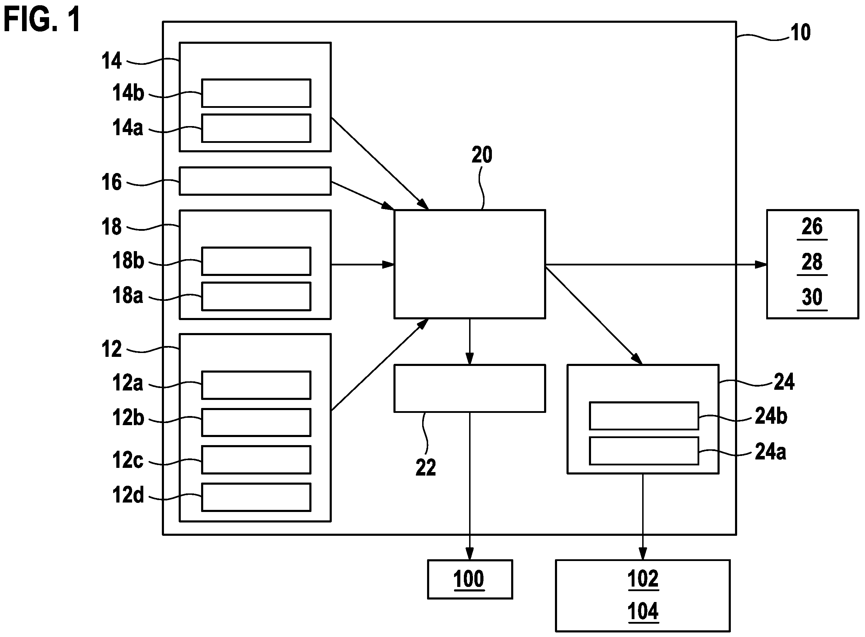

Fig. 1 shows an overall schematic view of a system 10 for performing the method for assisting a driver of a vehicle for emergencies situations at level crossing according to one embodiment of the invention. The system 10 is a vehicle system that comprises at least a navigation unit 12, surrounding sensors 14, vehicle sensors 16, in-car sensors 18, a control unit 20, a human machine-interface 22, a communication module 24.

The navigation unit 12 includes a map memory 12a, in which digital maps and/or road maps are stored. These maps incorporate data on the location of level crossings. The navigation unit 12 receives a current vehicle position via a satellite signal sensor (GPS) 12b using GPS or GNSS (e.g. Galileo). The navigation unit 12 comprises a map matching unit 12c that match the measured position of the vehicle to the digital map. Furthermore, the navigation unit 12 comprises a navigation module 12d that serves as an interface to the driver and where a route to a desired destination is determined and displayed in a map to the driver wherein level crossing are indicated. In addition, the navigation module 12d can provide visual or audible warnings when the vehicle is approaching a level crossing.

The surrounding sensors 14 comprises surroundings cameras 14a, radars 14b, LiDAR sensors or ultrasonic sensors mounted on the vehicle to detect objects in the vehicle's surroundings. Surroundings cameras 14a can, for example, identify traffic signs. Radar sensors 14b can supply data relating to vehicles or general objects in the surroundings, in particular distances, direction, and moving speed of these objects. Radars, for example, can detect the presence of trains. The vehicle sensors 16 comprise sensors such as travel distance sensors, speed sensors, steering wheel angle sensors, wheel rotational speed sensors, or yaw rate sensors, etc. In particular, the vehicle sensors can detect a state of motion of the vehicle. The in-car sensors 18 comprise in-cabin cameras 18a and sensors 18b that can track the driver's head, eye, and body movements or the hear pulse but also can detect the presence and the position of all vehicle occupants.

Based on digital data, vehicle position and calculated route as well as surrounding and vehicle sensors data, an ADAS (Advanced Driver Assistance System) horizon can be then produced for the driver assistance. An ADAS horizon is an electronic horizon that reflects the current road situation ahead of the vehicle and facilitate ADAS (Advanced Driver Assistance Systems) to assist and alert the driver accordingly. The fusion of the data can for example provide a more accurate position of the vehicle on the road. Thus contributes then to improve the detection and the follow-up of an emergency situation of a vehicle at or near a level crossing.

The communication module 24 comprises at least one of the following wireless communication system, an emergency call system 24a and a V2X communication system 24b. The emergy call system 24a includes an emergency call device. The emergency device comprises a processing unit for processing data output and/or input. The data can be related to the occupants and/or the vehicle and/or the location of the vehicle. The emergency device comprises also a communication terminal to provide connectivity to public land mobile network to establish voice and/or data connection. The emergency device may include an output interface such as a display/touchscreen and input interface such as a pushbuttons, speakers, keyboard, display/touch screen. The input or output allow an occupant of the vehicle to interact with the emergeny call device during emergencies or non-emergencies situations. The occupant can cancel an emergency call or provide additional information about the status of an emergency. The emergency device is connected to the control unit 20 that can detect an emergency situation. When an emergency situation is detected by the control unit 20 throught the sensors, the control unit sends a signal to the eCall device to activate the eCall device. During the emergency situation, The emergy call system 24a can transmit information about the vehicle, the location of the vehicle, the vehicle occupants, the incident or accident.

The V2X (Vehicle-to-Everything) communication system 24b includes a communication unit for transmitting and receiving V2X messages, a message generation unit for generating V2X messages to be transmitted by the communication unit. The V2X communication system enables communication between vehicles and trains by exchanging information like position, speed, and sensor data. This can contribute to avoid collisions at railway crossing by sharing location and movement details.

The control unit 20 can be configured to fuse and process data from the sensors 12, 14, 16 and the navigation unit 12 to ensure an assistance to the driver. Upon processing these data, the control unit 20 can be for example configured to identify potential hazards when the vehicle operates outside of predefined conditions. In particular, when the vehicle and surrounding sensors detect that the vehicle is approaching or crossing a level crossing with a speed lower than a speed limit, the control unit 20 can then identify an emergency situation. The area of potential danger can be estimated by the control unit 20 using vehicle and surrounding sensors data by calculating from a reference point a certain area where the vehicle can be considered in a potential dangerous situation. The reference point can be for example the position of a level crossing sign detected by the surrounding sensors. Upon the dection of a potential danger, the control unit 20 can then activate the human-machine interface 22 to provide different warnings to the driver.

The human-machine interface 22 comprises display devices and interfaces that may be used for example to display overlying or pop-up warnings to the driver upon detecting of a potentially unsafe driving condition based on detected road conditions. The warnings can be display in an interior mirror, dashboard, in the navigation unit, and/or broadcasted using vehicle's speakers. The warnings may for example include audible and/or visual feedbacks to the driver. The warning can further include, for example, icon, text, or traffic signal and may also provide a distance and/or a numerical countdown to a potentially unsafe driving condition using bar graph or sliding scale. The type of warnings or alerts can vary upon the current detected driving situations. For example, warnings can first be displayed within a specified time, before the upcoming potentially unsafe driving conditions, such that an upcoming level crossing. Once the vehicle is located withing an area of potential danger, such as near or at a level crossing, the display devices may displayed different warnings or alerts. Additionally, upon on the evolution of the potentially unsafe driving conditions, single or multiple warnings or alerts can be display to the driver such that their frequency and/or pitch, and/or light intensity can increase, be steady, or decrease over time. For example, when the vehicle speed is lower that a predefined speed limit in an area of potential danger, such as at or close to a level crossing, displayed warnings and alerts can be displayed with an increasing pitch, frequency and/or light intensity. Additionally, upon the detected occupant reaction in this emergency situation and after a predefined length of time, warnings and alerts can include a procedure to follow using audible and/or visual feedbacks and/or an alert message regarding issuing an emergency call.

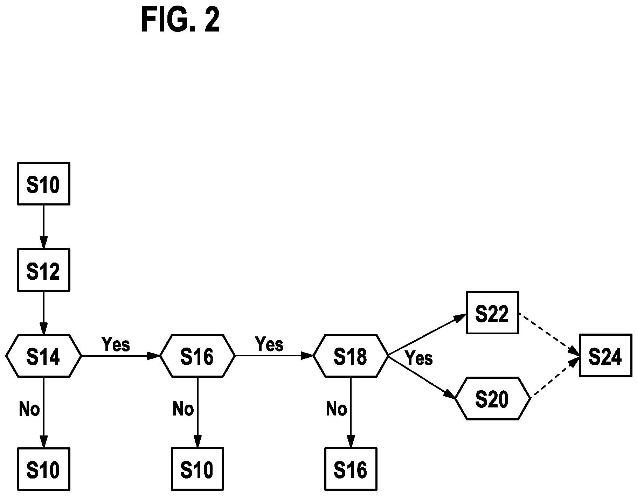

Fig. 2 is a flowchart of a method for assisting a driver of a vehicle for emergencies situations at level crossing excecuted by the system 10 shown in Fig. 1, more precisely by the control unit 20 of the system 10.

In block S10, a driver is assisted by an advanced driver assistance system and can be notified of road conditions with an ADAS horizon produced by the control unit 20 based on digital map data, vehicle position, calculated route and output signals of the surrounding sensors 14 and vehicle sensors 16. Output signals of the surrounding sensors 14 relate to any objects such as traffic sign or other vehicles detected around the vehicle. In the meantime, in-car sensors 18 track the position and actions of vehicle occupants.

In block S12, the navigation unit 12 may detect an upcoming potentially unsafe driving situation such as an upcoming level crossing. If, for example, a level crossing is predicted ahead of the vehicle, a warning such as a level crossing sign can be displayed on a navigation module 12d of the navigation unit 12. Meanwhile, the driver is still notified of the road conditions with an ADAS horizon produced by the control unit 20 and in-car sensors 16 still tracking position and actions of vehicle occupants.

In block S14, the control unit 20 determines whether the upcoming level crossing predicted in block S12 is now detected based on processing the output signals of the surrounding sensors 14 (radars and cameras) and vehicle sensors 16. If not, the remaing steps are skipped and the the control unit 20 continue monitoring the vehicle and assisting the driver. If an upcoming level crossing is identified, the control unit 20 can calculate from a reference point an area of potential danger. This area of potential danger can be considered the area where a potential collision of the vehicle at or near a level crossing could occur. The reference point can be for example the position of a level crossing sign detected by the surrounding sensors 14. In addition, the control unit 20 can operate a human-machine interface 22 to alert the driver of the potentially unsafe driving situation with the emission of audible and/or visible warnings. In-car sensors 18 still tracking position and actions of vehicle occupants.

In block S16, the control unit 20 determines whether the vehicle is within the area of potential danger calculated in block 14 based on estimating precisely the position of the vehicle by combining output signals of the navigation unit 12, surrounding sensors 14 and vehicle sensors 16. If not, the remaing steps are skipped and the control unit 20 continue monitoring the vehicle and assisting the driver. If the vehicle is located within the area of potential danger, the control unit 20 monitors in particular the position and speed of the vehicle as well position and actions of vehicle occupants. In details, output signals of the vehicle sensors 16 such as the vehicle speed are sent and process by the control unit 20 to determine whether there is a possibility that the vehicle reach a speed lower than a predefined speed limit. In addition, a precise position of the vehicle is calculated by the control unit 20 using data from the navigation system and from the surrounding sensors 14 and vehicle sensors 16.

In block S18, the control unit 20 determines whether the unsafe driving situation turn into an emergency situation at or near the level crossing by detecting that the speed of the vehicle is lower that a predefined speed limit and the vehicle is still located within the area of potential danger. If the unsafe driving situation do not turn into an emergency situation, the remaining steps are skipped and the control unit continue monitoring the vehicle and assisting the driver. An emergency situation could, for example, result in a potential collision with a train if the vehicle is stopped at the level crossing. Furthermore, depending on the vehicle speed and the location of the vehicle, the control unit 20 can operate the human-machine interface 22 with different levels of alert to the driver.

In block S20, the control unit 20 determines whether an automatic emergency call should be issued via a communication module 24 by detecting if the emergency situation is still unresolved after a predefined length of time. The control unit 20 can include a timer/clock to determine the time that elapsed since the detection of the emergency situation at the level crossing. If the emergency situation is resolved before the elapsing of a predefined length of time, the remaining steps are skipped and the control unit 20 continue monitoring the vehicle and assisting the driver. Responding properly to the emergency situation can be, for example, by driving the vehicle out of the area of danger. If not, the control unit 20 operates the human-machine interface 22 such that the level of alert is intensified with, for example, multiple warnings with potentially an intensification of their frequency, their pitch, and/or their emitting light. In addition, the control unit 20 issues automatically an emergency call via an emergency call system 24a and/or a V2X communication system 24b to the local authorities and/or to the railway authorities. While a countdown is used to delay issuing the automatic emergency call, occupants of the vehicle can be notified of the start of an emergency call through a countdown using the timer of the control unit 20. Such announcement may be made to the occupant through the human-machine interface 22 via displays or speakers, or some combinations. During the countdown, an occupant may cancel the emergency call procedure upon that the control unit 20 detects that the emergency situation was solved. The emergency call transmits relevant information, by message for example, about the vehicle and its location, the type of emergency situation, and the condition of the vehicle occupants.

In block S22, the control unit 20 can provide additional assistance in parallel of issuing the automatic emergency call in block S20. In details, the control unit can provide a procedure to follow via the human-machine interface 22. In addition, the control unit 20 can determine whether the vehicle occupants requires medical assistance by processing the ouputs signals from the in-car sensors 18, the vehicle sensors 16, and the surrounding sensors 14. During the emergency call, a request for medical assistance and relevant information about the vehicle occupants state can be transmitted.

In block S24, if the vehicle is an automated vehicle, the control unit 20 can operates the vehicle using the outputs signals of the vehicle and surrounding sensors 14, 16 by taking control of the steering wheels and the engine to remove the vehicle from the area of danger.

## Claims

1. Method for assisting a driver of a vehicle for emergencies situations at level crossing comprising the steps of:
- detecting a level crossing,
- monitoring the operating state of the vehicle,
- issuing at least one warning to the driver when expected operating conditions of the vehicle on a level crossing are not detected,
- if there is no adapted reaction detected, issuing an emergency call from the vehicle.

2. The method according to claim 1 wherein detecting the level crossing is achieved by predicting the level crossing ahead of the vehicle using a navigation unit (12) and/or by observing and identifying the level crossing using surrounding sensors (14).

3. The method for assisting a driver of a vehicle according to claims 1 or 2 wherein monitoring the operating state of the vehicle comprises receiving sensor data from vehicle sensors (16) that detect a state of the vehicle or vehicle parts; in particular, a state of motion of the vehicle.

4. The method for assisting a driver of a vehicle according to claim 3 wherein issuing the at least one warning to the driver is performed when a vehicle speed is lower than a predefined speed limit as detected by vehicle sensors (16) and the vehicle is still on or too close to the level crossing as detected by surroundings sensors (14).

5. The method for assisting a driver of a vehicle according to claims 1 to 4 wherein issuing the at least one warning to the driver is performed using optical, acoustic, or optical and acoustic signals.

6. The method for assisting a driver of a vehicle according to claims 4 or 5 wherein issuing the emergency call from the vehicle is performed using at least one of the following communication means: an emergency call system (24a) and a V2X communication system (24b) and when the vehicle is still on or too close to the level crossing and has a speed that is still lower than the predefined speed limit after a predefined length of time.

7. The method for assisting a driver of a vehicle according to claim 6 wherein issuing the emergency call is performed automatically to railway authorities and/or to an emergency call center while issuing at least one warning is performed to provide a procedure to follow for vehicle occupants and monitoring the occupant's behavior is performed using in-car sensors (18), vehicle sensors (16), and surrounding sensors (14).

8. The method for assisting a driver of a vehicle according to claim 7 wherein a control unit (20) operates autonomously the vehicle to move away the vehicle from the level crossing after the predefined length of time and when the vehicle is an automated vehicle and there is no appropriate response from the vehicle occupants to the at least one issued warning regarding the procedure to follow.

9. A System (10) for performing the method for assisting a driver of a vehicle for emergencies situations at level crossing according to any of claims 1 to 8 comprising at least:
- a navigation unit (12) configured to locate the vehicle on a map and comprises a satellite signal sensor (12b), a map memory (12a), and a map matching (12c),
- surrounding sensors (14) such as cameras (14a) and/or radars (14b) configured to identify objects in the vehicle surroundings, in particular traffic signs,
- vehicle sensors (16) configured to detect an operational state of the vehicle and comprise at least travel distance sensors, speed sensors, steering wheel angle sensors,
- in-car sensors (18) configured to detect at least the driver's head movement, driver's eyelid movement, and pulse rate,
- a human-machine interface (22) configured to issue at least one warning to the driver as optical, acoustic, or optical and acoustic signals, in particular words,
- a communication module (24) configured to communicate with sources external to the vehicle and comprising at least one of the following communication means: an emergency call system (24a) and a V2X communication system (24b),
- a control unit (20) configured to process data from at least the navigation unit (12), the surrounding sensors (14), the vehicle sensors (16), the in-car sensors (18), and to operate at least the communication module (24) and the human-machine interface (22).

10. The System according to claim 9 wherein the control unit (20) is configured to operate autonomously the vehicle when the vehicle is an automated vehicle.
